# EUROPEAN PATENT APPLICATION

(11) **EP 4 618 511 A1**
(43) Date of publication of application: **17.09.2025**
(21) Application number: 23890709.1
(22) Date of filing: 10.11.2023
(51) Int. Cl.: H04L 65/611, H04N 21/20

(54) **COMMUNICATION METHOD AND COMMUNICATION APPARATUS**

(30) Priority: 18.11.2022 CN 202211447873
(71) Applicant: Huawei Technologies Co., Ltd., Shenzhen, Guangdong 518129 (CN)
(72) Inventor: WANG, Yali, Shenzhen, Guangdong 518129 (CN); QUAN, Chao, Shenzhen, Guangdong 518129 (CN); WANG, Jian, Shenzhen, Guangdong 518129 (CN)
(74) Representative: Gill Jennings & Every LLP
(86) International application number: PCT/CN2023/131128
(87) International publication number: WO 2024/104275

(57) **Abstract**

This application provides a communication method, a communication apparatus, a computer-readable storage medium, and a computer program product in the communication field. In the technical solutions of this application, a streaming media source may provide different multicast services for different streaming media sinks in terms of a streaming media application, to provide streaming media services with different requirements for the different streaming media sinks in terms of the streaming media application.

## Description

This application claims priority to Chinese Patent Application No. 202211447873.8, filed with the China National Intellectual Property Administration on November 18, 2022 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

Currently, in a one-to-many or many-to-many streaming media application scenario, to save network communication resources, a streaming media source may send one streaming media stream to a plurality of streaming media sinks. However, different streaming media sinks have different service requirements or different data processing capabilities. As a result, service experience of each user cannot be taken into account in the conventional technology.

### SUMMARY

This application provides a communication method, a communication apparatus, a computer-readable storage medium, a computer program product, and a communication system, to provide a plurality of multicast services in terms of a streaming media application, so as to provide streaming media stream services with different requirements for different streaming media sinks in terms of the streaming media application.

According to a first aspect, this application provides a communication method. The method may include: A streaming media source sends a first message to a first streaming media sink, where the first message includes a first streaming media application identifier field and a first multicast group identifier field, the first streaming media application identifier field indicates a first streaming media application, the first multicast group identifier field indicates a first multicast group of the first streaming media application, and the first streaming media sink belongs to the first multicast group; and the streaming media source sends a second message to a second streaming media sink, where the second message includes a second streaming media application identifier field and a second multicast group identifier field, the second streaming media application identifier field indicates the first streaming media application, the second multicast group identifier field indicates a second multicast group of the first streaming media application, and the second streaming media sink belongs to the second multicast group.

In the method, the streaming media source indicates that different streaming media sinks are members in different multicast groups of a streaming media application. This provides a condition for multicasting different streaming media data streams of the streaming media application to different multicast groups, improves service flexibility of the streaming media application, and meets different service requirements of a plurality of users.

In the method, the streaming media source may provide services of one or more streaming media applications that include the first streaming media application. The first multicast group of the first streaming media application may be understood as transmitting a data stream of the first streaming media application to a member in the first multicast group in a multicast mode, and the second multicast group of the first streaming media application may be understood as transmitting a data stream of the first streaming media application to a member in the second multicast group in a multicast mode.

Optionally, any streaming media application in the streaming media source may include an audio application and/or a video application.

Optionally, the first message may be referred to as a message indicating that the first streaming media sink is the member in the first multicast group of the first streaming media application, and the second message may be referred to as a message indicating that the second streaming media sink is the member in the second multicast group of the first streaming media application.

In some possible implementations, the method further includes: The streaming media source receives a third message from the first streaming media sink, where the third message includes a first attribute parameter field, and the first attribute parameter field indicates at least one of the following attributes of the first streaming media sink: a codec quantity, an encoder identifier, a resolution, a frame rate, a codec profile, a codec level, a codec tier, a media data encapsulation format, a media data transmission protocol, a protocol stack type, a communication mode, or a spatial location, where the communication mode is multicast or unicast.

Alternatively, the attribute parameter field indicates a specific value of the foregoing attribute of the first streaming media sink.

Optionally, the attribute parameter field in the third message may be understood as being used to determine that the first streaming media sink belongs to the first multicast group. Alternatively, the streaming media source may send the first message based on the attribute parameter field in the third message. Alternatively, the streaming media source may determine, based on the attribute parameter field in the third message, to group the first streaming media sink into the first multicast group.

In this implementation, the streaming media source determines, based on an attribute of the first streaming media sink, a multicast group into which the first streaming media sink is grouped. This helps provide, for the first streaming media sink, a data stream of the first streaming media application that meets an attribute requirement of the first streaming media sink, and better improves experience satisfaction of the streaming media sink with the streaming media application.

It may be understood that the attribute parameter field indicates attributes of the first streaming media sink that are included in the message to which the attribute parameter field belongs.

Optionally, the third message further includes at least one of the following fields: a first attribute field, a first message type field, or a first member identity field; and the first attribute field indicates content indicated by the first attribute parameter field, the first message type field indicates that the third message is a group member join request message or a group member query acknowledgment message, and the first member identity field indicates the first streaming media sink.

The message type field may be understood as a type of a message to which the message type field belongs.

In some implementations, before the streaming media source receives the third message from the first streaming media sink, the method may further include: The streaming media source sends a fourth message to the first streaming media sink, where the fourth message is used to query for a member in at least one multicast group of at least one streaming media application, the at least one streaming media application includes the first streaming media application, and the at least one multicast group includes the first multicast group.

Optionally, the at least one streaming media application may further include one or more streaming media applications other than the first streaming media application on the streaming media source, and the at least one multicast group may include one or more multicast groups of each streaming media application in the at least one streaming media application.

Optionally, this implementation may be understood as that the third message is sent by the first streaming media sink in response to the fourth message.

Optionally, before the streaming media source sends the first message to the first streaming media sink or the streaming media source receives the third message from the first streaming media sink, the first streaming media sink may be the member in the first multicast group, or may be a member in another multicast group other than the first multicast group of the first streaming media application, or may be a member of a streaming media application other than the first streaming media application.

In a scenario in which the first streaming media sink is grouped into a multicast group before the streaming media source sends the first message to the first streaming media sink or before the streaming media source receives the third message from the first streaming media sink, the first streaming media sink continues to report its own attribute value in the third message in response to the fourth message, to update its own attribute value in time. This helps the streaming media source perform multicast group grouping based on a latest attribute value of the first streaming media sink, and helps the streaming media source provide, for the first streaming media sink, a streaming media service that can better meet a requirement.

In some possible implementations, the fourth message includes at least one of the following fields: a second message type field, a third streaming media application identifier field, or a multicast group field, the second message type field indicates that the fourth message is a group member query indication message, the third streaming media application identifier field indicates the at least one streaming media application, and the multicast group field indicates the at least one multicast group.

It may be understood that the streaming media application identifier field may indicate an identifier of each streaming media application in the at least one streaming media application, the at least one multicast group may include all or some multicast groups in each streaming media application, and the multicast group field may indicate each multicast group in the at least one multicast group.

Optionally, the fourth message may include at least one streaming media application identifier field that one-to-one corresponds to at least one streaming media application, and each streaming media application identifier field indicates a corresponding streaming media application. The fourth message may include a multicast group identifier field that one-to-one corresponds to the at least one streaming media application, and each multicast group identifier field indicates one or more multicast groups in a corresponding streaming media application.

Alternatively, the streaming media application identifier field in the fourth message includes at least one application identifier subfield, the at least one application identifier subfield one-to-one corresponds to at least one streaming media application, and each application identifier subfield indicates a corresponding streaming media application. The multicast group identifier field in the fourth message may include at least one multicast group identifier subfield, the at least one multicast group identifier subfield one-to-one corresponds to the at least one streaming media application, and each multicast group identifier subfield indicates one or more multicast groups in a corresponding streaming media application.

In some possible implementations, the first message includes at least one of the following fields: a first response result field, a third message type field, a first multicast group quantity field, or a second member identity field.

The first response result field indicates that the streaming media source accepts a request, the third message type field indicates that the first message is a group member join response message, the first multicast group quantity field indicates a quantity of multicast groups of the first streaming media application, and the second member identity field indicates the first streaming media sink.

Optionally, that the first response field indicates that the request is accepted may be understood as that the first response field indicates that the streaming media source accepts a request of a message sent by the first streaming media sink before the first message, for example, accepts a group member join request before the first message.

In some possible implementations, the method further includes: The streaming media source sends a first media stream to a member in the first multicast group; and the streaming media source sends a second media stream to a member in the second multicast group, where the first media stream is different from the second media stream in at least one of the following attributes: a codec type, a resolution, a frame rate, a codec profile, a codec level, a codec tier, a media data encapsulation format, a media data transmission protocol, a protocol stack type, or a communication mode, where the communication mode is multicast or unicast.

In this implementation, the streaming media source multicasts streaming media stream data with different attributes for members in different multicast groups of the first streaming media application, so that different attribute requirements of different streaming media sinks on a streaming media application can be met.

In some possible implementations, the method further includes: The streaming media source maintains a multicast group member management table, where the multicast group member management table includes a first entry and a second entry, the first entry includes an identifier of the first streaming media application, an identifier of the first multicast group, and an identifier of the first streaming media sink, and the second entry includes the identifier of the first streaming media application, an identifier of the second multicast group, and an identifier of the second streaming media sink.

It may be understood that one entry in the multicast group member management table is a whole, and it indicates that a streaming media sink indicated by the entry is a member in a multicast group that is indicated by the entry and that is of a streaming media application indicated by the entry.

Optionally, if the streaming media source groups the first streaming media sink into a multicast group for the first time, the streaming media source may add the first entry to the multicast group member management table when grouping the first streaming media sink into the first multicast group.

Optionally, if the first streaming media sink is previously grouped into another multicast group, and is currently moved from the another multicast group to the first multicast group, when adding the first entry, the streaming media source may delete an entry indicating that the first streaming media belongs to the another multicast group, or identify an entry indicating that the first streaming media belongs to the another multicast group as invalid.

Optionally, when the first streaming media sink is grouped into another multicast group, the streaming media source may also group the first streaming media sink into the first multicast group. In this case, the streaming media source may newly add the first entry on the basis of maintaining an original entry.

In some possible implementations, the method may further include: The streaming media source receives a group member leave request message from the first streaming media sink, where the group member leave request message includes a fourth streaming media application identifier field and a third multicast group identifier field, the fourth streaming media application identifier field indicates the first streaming media application, and the third multicast group identifier field indicates the first multicast group.

Optionally, the group member leave request message may be understood as indicating that the first streaming media application requests to exit or leave the first multicast group of the first streaming media application. In this way, when the streaming media source multicasts a corresponding streaming media data stream to the member in the first multicast group, the streaming media source may no longer send the streaming media data stream to the first streaming media sink, or the first streaming media sink no longer receives the streaming media data stream.

In this implementation, when the first streaming media sink no longer needs the streaming media data stream of the first multicast group, the streaming media source is notified. This can avoid a waste of resources of the streaming media source and the first streaming media sink.

Optionally, after receiving the group member leave request message, the streaming media source may delete the first entry in the group member management table, or mark the first entry as invalid. This prevents the streaming media source from continuing to maintain the entry, and avoids a waste of resources.

Optionally, the group member leave request message further includes at least one of the following fields: a fourth message type field or a third member identity field; and the fourth message type field indicates that a message type is the group member leave request message, and the third member field indicates the first streaming media sink.

Optionally, when the streaming media source receives the group member leave request message, the method further includes: The streaming media source sends a response message of the group member leave request message to the first streaming media sink, where the response message includes a second response result field, and the second response result field indicates that the streaming media source accepts a request, signaling is not identified, a signaling format is incorrect, a signaling format is invalid, a multicast streaming media application identifier is incorrect, a multicast streaming media application identifier is invalid, or there is another error.

In this implementation, the first streaming media sink may learn of a result of requesting to leave the first multicast group. This helps the first streaming media sink continue to perform a corresponding operation based on the result.

Optionally, the response message includes at least one of the following fields: a fifth message type field, a second multicast group quantity field, a fifth streaming media application identifier field, a fourth multicast group identifier field, or a fourth member identity field.

The fifth message type field indicates that the response message is a group member leave response message, the fifth streaming media application identifier field indicates the first streaming media application, the second multicast group quantity field indicates the quantity of multicast groups of the first streaming media application, the fourth multicast group identifier field indicates the first multicast group, and the fourth member identity field indicates the first streaming media sink.

In some possible implementations, the method further includes: The streaming media source receives a fifth message from a third streaming media sink, where the fifth message includes at least one of the following fields: a sixth message type field, a second attribute field, a second attribute parameter field, a sixth streaming media application identifier field, or a fifth member identity field; and the streaming media source sends a sixth message to the third streaming media sink, where the sixth message includes at least one of the following fields: a seventh message type field, a third multicast group quantity field, a seventh streaming media application identifier field, a sixth member identity field, or a third response result field.

The sixth message type field indicates that the fifth message is a group member join request message or a group member query acknowledgment message.

The second attribute field indicates that the fifth message includes at least one of the following attributes of the third streaming media sink: a codec quantity, an encoder identifier, a resolution, a frame rate, a codec profile, a codec level, a codec tier, a media data encapsulation format, a media data transmission protocol, a protocol stack type, a communication mode, or a spatial location, where the communication mode is multicast or unicast.

The second attribute parameter field indicates the at least one of the following attributes of the third streaming media sink: the codec quantity, the encoder identifier, the resolution, the frame rate, the codec profile, the codec level, the codec tier, the media data encapsulation format, the media data transmission protocol, the protocol stack type, the communication mode, or the spatial location, where the communication mode is the multicast or the unicast.

The seventh message type field indicates that the sixth message is a group member join response message, and the third response result field indicates that signaling is not identified, a signaling format is incorrect, a signaling format is invalid, a multicast streaming media application identifier is incorrect, a multicast streaming media application identifier is invalid, or there is another error.

The sixth streaming media application identifier field and the seventh streaming media application identifier field indicate the first streaming media application.

The third multicast group quantity field indicates the quantity of multicast groups of the first streaming media application, and the fifth member identity field and the sixth member identity field indicate the third streaming media sink.

In this implementation, after receiving the group member join request message or the group member query acknowledgment message of the streaming media sink, the streaming media source may notify the streaming media sink of a receiving result regardless of whether the message is successfully received or fails to be received. This helps the streaming media sink perform a subsequent corresponding operation in time and correctly based on the result.

In some implementations, the first streaming media application identifier field further indicates a second streaming media application, the first multicast group identifier field further indicates a third multicast group of the second streaming media application, and the first streaming media sink belongs to the third multicast group.

It may be understood that, in the foregoing some implementations, interaction between the first streaming media sink and the streaming media source is described mainly by focusing on the first message. However, similarly, a similar message interaction procedure may also be performed between the second streaming media sink and the streaming media source. Details are not described herein.

Optionally, all or some of the messages in the method may be messages at an application layer.

According to a second aspect, this application provides a communication method. The method includes: A first streaming media sink receives a first message from a streaming media source, where the first message includes a first streaming media application identifier field and a first multicast group identifier field, the first streaming media application identifier field indicates a first streaming media application, the first multicast group identifier field indicates a first multicast group of the first streaming media application, the first multicast group is one of a plurality of multicast groups of the first streaming media application, and the first streaming media sink belongs to the first multicast group.

For example, the plurality of multicast groups of the first streaming media application may further include a second multicast group. In this case, the streaming media source may send a second message to a second streaming media sink in the second multicast group, where the second message includes a streaming media application identifier field and a multicast group identifier field, the streaming media application identifier field in the second message indicates the first streaming media application, and the multicast group identifier field in the second message indicates the second multicast group of the first streaming media application.

In some possible implementations, the method further includes: The first streaming media sink sends a second message to the streaming media source, where the second message includes a first attribute parameter field, and the second attribute parameter field indicates at least one of the following attributes of the first streaming media sink: a codec quantity, an encoder identifier, a resolution, a frame rate, a codec profile, a codec level, a codec tier, a media data encapsulation format, a media data transmission protocol, a protocol stack type, a communication mode, or a spatial location, where the communication mode is multicast or unicast.

In some possible implementations, the first attribute parameter field is used to group the first streaming media sink into the first multicast group.

In some possible implementations, the second message further includes at least one of the following fields: a first attribute field, a first message type field, or a first member identity field; and the first attribute field indicates content indicated by the first attribute parameter field, the first message type field indicates that the second message is a group member join request message or a group member query acknowledgment message, and the first member identity field indicates the first streaming media sink.

In some possible implementations, before the first streaming media sink sends the second message to the streaming media source, the method further includes: The first streaming media sink receives a third message from the streaming media source, where the third message is used to query for a member in at least one multicast group of at least one streaming media application, the at least one streaming media application includes the first streaming media application, and the at least one multicast group includes the first multicast group.

In some possible implementations, the third message includes at least one of the following fields: a second message type field, a third streaming media application identifier field, or a multicast group field, the second message type field indicates that the third message is a group member query indication message, the third streaming media application identifier field indicates the at least one streaming media application, and the multicast group field indicates the at least one multicast group.

In some possible implementations, the first message includes at least one of the following fields: a first response result field, a third message type field, a first multicast group quantity field, or a second member identity field.

The first response field indicates that the streaming media source accepts a request, the third message type field indicates that the first message is a group member join response message, the first multicast group quantity field indicates a quantity of multicast groups of the first streaming media application, and the second member identity field indicates the first streaming media sink.

In some possible implementations, the method further includes: The first streaming media sink receives a first media stream from the streaming media source, where the first media stream is different from a second media stream sent by the streaming media source to a member in a second multicast group in at least one of the following attributes: a codec type, a resolution, a frame rate, a codec profile, a codec level, a codec tier, a media data encapsulation format, a media data transmission protocol, a protocol stack type, or a communication mode, where the communication mode is multicast or unicast.

In some possible implementations, the method further includes: The first streaming media sink sends a group member leave request message to the streaming media source, where the group member leave request message includes a fourth streaming media application identifier field and a third multicast group identifier field, the fourth streaming media application identifier field indicates the first streaming media application, and the third multicast group identifier field indicates the first multicast group.

In some possible implementations, the group member leave request message further includes at least one of the following fields: a fourth message type field and a third member identity field; and the fourth message type field indicates that a message type is the group member leave request message, or the third member field indicates the first streaming media sink.

In some possible implementations, the method further includes: The first streaming media sink receives a response message of the group member leave request message from the streaming media source, where the response message includes a second response result field, and the second response result field indicates that the streaming media source accepts a request, signaling is not identified, a signaling format is incorrect, a signaling format is invalid, a multicast streaming media application identifier is incorrect, a multicast streaming media application identifier is invalid, or there is another error.

In some possible implementations, the response message includes at least one of the following fields: a fifth message type field, a second multicast group quantity field, a fifth streaming media application identifier field, a fourth multicast group identifier field, or a fourth member identity field.

The fifth message type field indicates that the response message is a group member leave response message, the fifth streaming media application identifier field indicates the first streaming media application, the second multicast group quantity field indicates the quantity of multicast groups of the first streaming media application, the fourth multicast group identifier field indicates the first multicast group, and the fourth member identity field indicates the first streaming media sink.

In some possible implementations, the method further includes: The first streaming media sink sends a fourth message to the streaming media source, where the fourth message includes at least one of the following fields: a sixth message type field, a second attribute field, a second attribute parameter field, a sixth streaming media application identifier field, or a fifth member identity field; and the first streaming media sink receives a fifth message from the streaming media source, where the fifth message includes at least one of the following fields: a seventh message type field, a third multicast group quantity field, a seventh streaming media application identifier field, a sixth member identity field, or a third response result field.

The sixth message type field indicates that the fourth message is a group member join request message or a group member query acknowledgment message.

The second attribute field indicates that the fourth message includes the at least one of the following attributes of the first streaming media sink: the codec quantity, the encoder identifier, the resolution, the frame rate, the codec profile, the codec level, the codec tier, the media data encapsulation format, the media data transmission protocol, the protocol stack type, the communication mode, or the spatial location, where the communication mode is the multicast or the unicast.

The second attribute parameter field indicates the at least one of the following attributes of the first streaming media sink: the codec quantity, the encoder identifier, the resolution, the frame rate, the codec profile, the codec level, the codec tier, the media data encapsulation format, the media data transmission protocol, the protocol stack type, the communication mode, or the spatial location, where the communication mode is the multicast or the unicast.

The seventh message type field indicates that the fifth message is a group member join response message, and the third response result field indicates that a request is accepted, signaling is not identified, a signaling format is incorrect, a signaling format is invalid, a multicast streaming media application identifier is incorrect, a multicast streaming media application identifier is invalid, or there is another error.

The sixth streaming media application identifier field and the seventh streaming media application identifier field indicate the first streaming media application.

The third multicast group quantity field indicates the quantity of multicast groups of the first streaming media application, and the fifth member identity field and the sixth member identity field indicate the first streaming media sink.

It may be understood that, for implementations of the second aspect, refer to the related content in the first aspect. Details are not described herein again.

According to a third aspect, this application provides a communication apparatus. The apparatus may include modules configured to implement the method in any implementation of the first aspect. Each module may be implemented by software and/or hardware.

In some possible implementations, the apparatus may include a communication module and a processing module. The communication module may be configured to implement steps related to a receiving operation and a sending operation in the first aspect. The processing module may be configured to implement another operation in the first aspect.

In some possible implementations, the apparatus may include a processor and a memory. The memory is configured to store computer-executable program code. The program code includes instructions, and when the processor executes the instructions, the instructions enable the apparatus to perform the method according to the first aspect or any implementation of the first aspect.

In this implementation, the apparatus may be a streaming media source, or may be a chip used in a streaming media source.

According to a fourth aspect, this application provides a communication apparatus. The apparatus may include modules configured to implement the method in any implementation of the second aspect. Each module may be implemented by software and/or hardware.

In some possible implementations, the apparatus may include a communication module and a processing module. The communication module may be configured to implement steps related to a receiving operation and a sending operation in the second aspect. The processing module may be configured to implement another operation in the second aspect.

In some possible implementations, the apparatus may include a processor and a memory. The memory is configured to store computer-executable program code. The program code includes instructions, and when the processor executes the instructions, the instructions enable the apparatus to perform the method according to the second aspect or any implementation of the second aspect.

In this implementation, the apparatus may be a streaming media sink, or may be a chip used in a streaming media sink.

According to a fifth aspect, this application provides a computer program product including instructions. When the computer program product runs on an electronic device or a computer, the electronic device or the computer performs the method according to the first aspect or any possible implementation of the first aspect, or the electronic device or the computer performs the method according to the second aspect or any possible implementation of the second aspect.

According to a sixth aspect, this application provides a computer-readable storage medium. The computer-readable storage medium stores instructions. When the instructions are run on an electronic device or a computer, the electronic device or the computer performs the method according to the first aspect or any implementation of the first aspect, or the electronic device or the computer performs the method according to the second aspect or any possible implementation of the second aspect.

According to a seventh aspect, this application provides a communication system. The communication system includes the communication apparatus according to the third aspect and the communication apparatus according to the fourth aspect.

### BRIEF DESCRIPTION OF DRAWINGS

FIG. 1 is a diagram of a structure of a communication system according to an embodiment of this application;
FIG. 2 is a schematic flowchart of a communication method according to an embodiment of this application;
FIG. 3 is a schematic flowchart of a communication method according to an embodiment of this application;
FIG. 4 is a schematic flowchart of a communication method according to another embodiment of this application;
FIG. 5 is a schematic flowchart of a communication method according to still another embodiment of this application;
FIG. 6A and FIG. 6B are a schematic flowchart of a communication method according to yet another embodiment of this application;
FIG. 7A and FIG. 7B are a schematic flowchart of a communication method according to still yet another embodiment of this application;
FIG. 8 is a schematic flowchart of a communication method according to a further embodiment of this application;
FIG. 9 is a diagram of a structure of a communication apparatus according to an embodiment of this application;
FIG. 10 is a diagram of a structure of a communication apparatus according to another embodiment of this application; and
FIG. 11 is a diagram of a structure of a communication apparatus according to an embodiment of this application.

### DESCRIPTION OF EMBODIMENTS

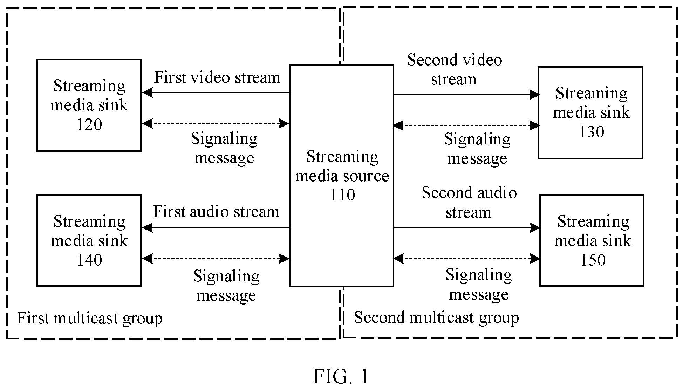

FIG. 1 is a diagram of a structure of a communication system 100 according to an embodiment of this application. As shown in FIG. 1, the communication system 100 may include a streaming media source 110, a streaming media sink 120, a streaming media sink 130, a streaming media sink 140, and a streaming media sink 150.

The streaming media source 110 is a device that can generate and/or send streaming media data. In an example, the streaming media source 110 may provide audio data and/or video data.

In this application, the streaming media source 110 may be referred to as a source or a provider of a streaming media application.

In an example, the streaming media source 110 may be a streaming media server, a computer, a camera, an access point (AP) in a wireless local area network accessed by a head-mounted display in a wireless virtual reality (virtual reality, VR) scenario, or the like.

The streaming media application is an application that generates an audio stream and/or a video stream, and includes but is not limited to an audio and video entertainment application, an information application, a social application, a game application, a shopping application, a conference application, and a tool application.

The streaming media sink 120, the streaming media sink 130, the streaming media sink 140, and the streaming media sink 150 are devices that use the streaming media data, and the use is, for example, playing. In this application, the streaming media sink may be referred to as a sink, a user, or an invoker of the streaming media application.

In an example, one or more of the streaming media sink 120, the streaming media sink 130, the streaming media sink 140, and the streaming media sink 150 may be diversified terminal devices such as a smart display screen (smart screen for short), a large display screen, a head unit, a mobile phone, or a VR head-mounted display device.

In this application, the streaming media source may be referred to as a management node that is referred to as a node G for short; and the streaming media sink may be referred to as a subordinate node or a slave node that is referred to as a node T for short.

The streaming media source 110 may communicate with the streaming media source 120, the streaming media sink 130, the streaming media sink 140, and the streaming media sink 150. Optionally, the streaming media source 110 may communicate with the streaming media sink 120 and the streaming media sink 130 in one or more modes of broadcast, unicast, or multicast.

Unicast belongs to point-to-point communication.

Broadcast may be understood as that the streaming media source 110 sends information to all streaming media sinks including the streaming media sink 120 and the streaming media sink 130 in a subnet, and all the streaming media sinks in the subnet may receive broadcast information from the streaming media source. In other words, broadcast belongs to point-to-all-point communication.

Multicast is between unicast and broadcast. Multicast may be understood as that the streaming media source 110 sends information to a group of streaming media sinks, and all streaming media sinks in the group may receive the information. The group of streaming media sinks may be referred to as a multicast group. Multicast belongs to point-to-multipoint communication.

In the multicast mode, when sending data streams to the plurality of streaming media sinks, the streaming media source 110 may send only one data stream, and a destination address of the data stream is an address of the multicast group. In this way, all members belonging to the group can receive a copy of the data stream sent by the streaming media source 110. In the multicast mode, only the members who really need the data stream receive the information, and other streaming media sinks do not receive the information.

The multicast mode can resolve a problem of repeated data copying and repeated bandwidth occupation in unicast, and can also resolve a problem of a waste of bandwidth resources in broadcast.

In this embodiment, the streaming media sink 120 and the streaming media sink 140 may be members in a same multicast group, and the multicast group may be referred to as a first multicast group. The streaming media sink 130 and the streaming media sink 150 may be members in another multicast group, and the multicast group may be referred to as a second multicast group.

The streaming media source 110, the streaming media sink 120, and the streaming media sink 140 may form the first multicast group, and the streaming media source 110, the streaming media sink 130, and the streaming media sink 150 may form the second multicast group.

The streaming media source 110 performs signaling interaction with members (for example, the streaming media source 140 and the streaming media sink 120) in the first multicast group, and the streaming media source 110 may send a media stream to the members in the first multicast group.

Similarly, the streaming media source 110 performs signaling interaction with members (for example, the streaming media source 130 and the streaming media sink 150) in the second multicast group, and the streaming media source 110 may send a media stream to the members in the second multicast group.

It may be understood that quantities of streaming media sources and streaming media sinks in FIG. 1 are merely examples. The communication system in this application includes more streaming media sources and/or streaming media sinks, or may further include another device, for example, a gateway device.

In an example, the communication system shown in FIG. 1 may be applied to a one-to-many wireless screen projection scenario, a multi-screen and multi-display scenario, a one-to-many wireless camera video transmission scenario, or a split-screen splicing display scenario, to implement one-to-many screen projection and many-to-many screen projection through multicast screen projection.

For example, the streaming media source 110 includes one or more computers, and the streaming media sink 120 and the streaming media sink 130 are smart screens. The computer or the computers multicast a video stream to the smart screens, to project the video stream to the plurality of smart screens for display.

For another example, in a splicing screen scenario, the streaming media source 110 includes one computer, and the streaming media sink 120 and the streaming media sink 130 are smart screens. The computer sends, in a multicast transmission mode, a streaming media data stream to the plurality of smart display screens for splicing and screen projection display.

For another example, in a one-to-many camera video transmission scenario, the streaming media source 10 includes a camera, and the streaming media sink 120 and the streaming media sink 130 are electronic devices having a display. The camera transmits, in a multicast mode, a collected video to the plurality of electronic devices for display.

In addition, in places such as VR cinemas, VR live sports games, concerts, museums, or science and technology museum guides, there is also the one-to-many wireless screen projection scenario, the multi-screen and multi-display scenario, the one-to-many wireless camera video transmission scenario, or the split-screen splicing display scenario. Alternatively, the system shown in FIG. 1 may also be applied to these scenarios.

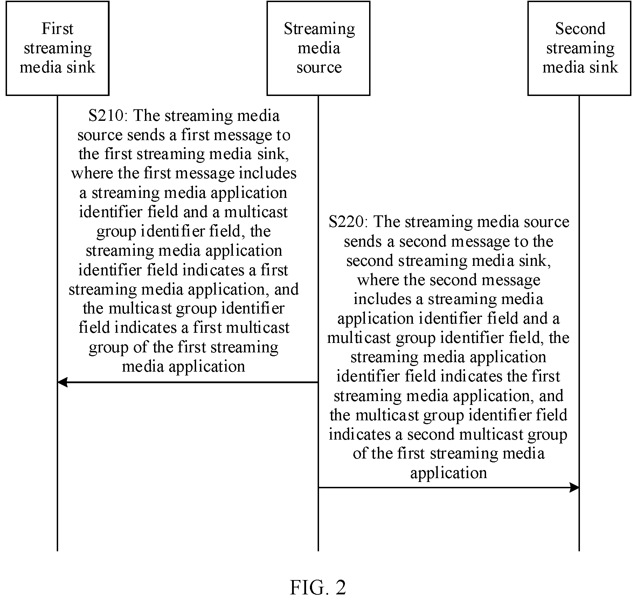

FIG. 2 is a schematic flowchart of a communication method according to an embodiment of this application. As shown in FIG. 2, the communication method in this embodiment may include S210 and S220. A streaming media source may be the streaming media source 110, a first streaming media sink may be the streaming media sink 120, and a first streaming media sink may be the streaming media sink 130.

S210: The streaming media source sends a first message to the first streaming media sink, where the first message includes a streaming media application identifier field and a multicast group identifier field, the streaming media application identifier field indicates a first streaming media application, the multicast group identifier field indicates a first multicast group of the first streaming media application, and the first streaming media sink belongs to the first multicast group.

Based on the streaming media application identifier field in the first message, the first streaming media sink may learn that the first streaming media sink can use the first streaming media application, or the first streaming media sink may learn that the first streaming media sink is a member of the first streaming media application.

In an example, the first streaming media application identifier field may include an App.ID or a UUID of the first streaming media application.

It may be understood that, in embodiments of this application, each streaming media application may be indicated by using an App.ID or a UUID. In other words, a streaming media identifier field indicating a streaming media application may indicate the streaming media application by using an App.ID or a UUID.

Based on the multicast group identifier field, the first streaming media sink member may learn that the first streaming media sink belongs to the first multicast group of the first streaming media application, or the first streaming media sink may learn that the first streaming media sink is a member in the first multicast group.

In an example, the first multicast group identifier field may include a Group ID or a Source ID, and the Group ID or the Source ID indicates the first multicast group.

It may be understood that, in embodiments of this application, each multicast group may be indicated by using a Group ID or a Source ID. In other words, a multicast group identifier field indicating a multicast group may indicate the multicast group by using a Group ID or a Source ID.

In general, based on the streaming media application identifier field and the multicast group identifier field, the first streaming media sink may learn that the first streaming media sink belongs to the first multicast group of the first streaming media application, or the first streaming media sink may learn that the first streaming media sink is the member in the first multicast group of the first streaming media application.

Optionally, the first message may further include a member identity field, and the member identity field indicates the first streaming media sink.

In an example, the member identity field may indicate the first streaming media sink by using an L2ID of the first streaming media sink.

It may be understood that, in embodiments of this application, each streaming media sink may be indicated by using an L2ID. In other words, a streaming media identity field indicating a streaming media sink may indicate the streaming media sink by using an L2ID.

Optionally, the first message may include a message type field.

In an example, the message type field indicates that a message type of the first message is a group member join response message. In this case, optionally, the first message may be a unicast message or a point-to-point message, or may be a message sent by the streaming media source only to the first streaming media sink.

In another example, the message type field indicates that a message type of the first message is a group member query indication message. In this case, optionally, the first message may be a unicast message, a multicast message, or a broadcast message.

Optionally, the first streaming media sink may be a member of a plurality of streaming media applications. In this case, the first message may further indicate these streaming media applications. For example, the streaming media application identifier in the first message may further indicate these streaming media applications. For another example, the first message further includes more streaming media application identifier fields, and these streaming media application identifier fields indicate these streaming media applications.

Optionally, the first streaming media sink may be a member of multicast groups of another streaming media application. In this case, the first message may further indicate these multicast groups. For example, the multicast group identifier field in the first message may further indicate these multicast groups. For another example, the first message may include another multicast group identifier field, and the another multicast group identifier field indicates a multicast group other than the first multicast group.

Optionally, the first message may further include a response result field, and the response result field indicates that a request is accepted. For example, in a scenario in which the streaming media source groups the first streaming media sink into the first multicast group in response to the request of the first streaming media sink, that the response result field indicates that the request is accepted may be understood as that the streaming media source accepts the request of the first streaming media sink. The request of the first streaming media sink may be requesting to join a multicast group, that is, a multicast group to be joined is not specified; or the request of the first streaming media sink may be requesting to join the first multicast group, that is, the first streaming media sink specifies to join the first multicast group.

Optionally, in some other scenarios, the response result field indicates that signaling is not identified, a signaling format is incorrect, a signaling format is invalid, a multicast streaming media application identifier is incorrect, a multicast streaming media application identifier is invalid, or there is another error.

For example, when the streaming media application requested by the first streaming media sink is not a streaming media application that can be provided by the streaming media source, the response result field may indicate that the multicast streaming media application identifier is invalid.

For another example, when a format of the streaming media application identifier indicated when the first streaming media sink requests the streaming media application is incorrect, the response result field may indicate that the multicast streaming media application identifier is incorrect.

For still another example, when the streaming media source cannot successfully identify or parse the message sent by the first streaming media sink, the response result field may indicate that the signaling is not identified, the signaling format is incorrect, the signaling format is invalid, or the like.

For still another example, when the streaming media source detects, for the message sent by the first streaming media sink, a failure cause that is not clearly defined, the response result field may indicate the another error.

S220: The streaming media source sends a second message to the second streaming media sink, where the second message includes a streaming media application identifier field and a multicast group identifier field, the streaming media application identifier field indicates the first streaming media application, the multicast group identifier field indicates a second multicast group of the first streaming media application, and the second streaming media sink belongs to the second multicast group.

Based on the streaming media application identifier field in the second message, the second streaming media sink may learn that the second streaming media sink can use the first streaming media application, or the second streaming media sink may learn that the second streaming media sink is a member of the first streaming media application.

Based on the multicast group identifier field, the second streaming media sink member may learn that the second streaming media sink belongs to the second multicast group of the first streaming media application, or the second streaming media sink may learn that the second streaming media sink is a member in the second multicast group.

In general, based on the streaming media application identifier field and the multicast group identifier field, the second streaming media sink may learn that the second streaming media sink belongs to the second multicast group of the first streaming media application, or the second streaming media sink may learn that the second streaming media sink is the member in the second multicast group of the first streaming media application.

Optionally, the second message may further include a member identity field, and the member identity field indicates the second streaming media sink.

Optionally, the second message may include a message type field.

In an example, the message type field indicates that a message type of the second message is a group member join response message. In this case, optionally, the second message may be a unicast message or a point-to-point message, or may be a message sent by the streaming media source only to the second streaming media sink.

In another example, the message type field indicates that a message type of the second message is a group member query indication message. In this case, optionally, the second message may be a unicast message, a multicast message, or a broadcast message.

Optionally, the second message may further include a response result field, and the response result field indicates that a request is accepted. For example, in a scenario in which the streaming media source groups the second streaming media sink into the second multicast group in response to the request of the second streaming media sink, that the response result field indicates that the request is accepted may be understood as that the streaming media source accepts the request of the second streaming media sink. The request of the second streaming media sink may be requesting to join a multicast group, that is, a multicast group to be joined is not specified; or the request of the second streaming media sink may be requesting to join the second multicast group, that is, the second streaming media sink specifies to join the second multicast group.

Optionally, in some other scenarios, the response result field indicates that signaling is not identified, a signaling format is incorrect, a signaling format is invalid, a multicast streaming media application identifier is incorrect, a multicast streaming media application identifier is invalid, or there is another error.

For example, when the streaming media application requested by the second streaming media sink is not a streaming media application that can be provided by the streaming media source, the response result field may indicate that the multicast streaming media application identifier is invalid.

For another example, when a format of the streaming media application identifier indicated when the second streaming media sink requests the streaming media application is incorrect, the response result field may indicate that the multicast streaming media application identifier is incorrect.

For still another example, when the streaming media source cannot successfully identify or parse the message sent by the second streaming media sink, the response result field may indicate that the signaling is not identified, the signaling format is incorrect, the signaling format is invalid, or the like.

For still another example, when the streaming media source detects, for the message sent by the second streaming media sink, a failure cause that is not clearly defined, the response result field may indicate the another error.

In this embodiment, in some possible implementations, the streaming media source includes a multicast group member management table. The multicast group member management table includes a first entry and a second entry, the first entry includes an identifier of the first streaming media application, an identifier of the first multicast group, and an identifier of the first streaming media sink, and the second entry includes the identifier of the first streaming media application, an identifier of the second multicast group, and an identifier of the second streaming media sink.

It may be understood that one entry in the multicast group member management table is a whole, and it indicates that a streaming media sink indicated by the entry is a member in a multicast group that is indicated by the entry and that is of a streaming media application indicated by the entry.

Optionally, if the streaming media source groups the first streaming media sink into a multicast group for the first time, the streaming media source may add the first entry to the multicast group member management table when grouping the first streaming media sink into the first multicast group.

Optionally, if the first streaming media sink is previously grouped into another multicast group, and is currently moved from the another multicast group to the first multicast group, when adding the first entry, the streaming media source may delete an entry indicating that the first streaming media belongs to the another multicast group, or identify an entry indicating that the first streaming media belongs to the another multicast group as invalid.

Optionally, when the first streaming media sink is grouped into another multicast group, the streaming media source may also group the first streaming media sink into the first multicast group. In this case, the streaming media source may newly add the first entry on the basis of maintaining an original entry.

Optionally, the first message and/or the second message may further include an identifier of the streaming media source.

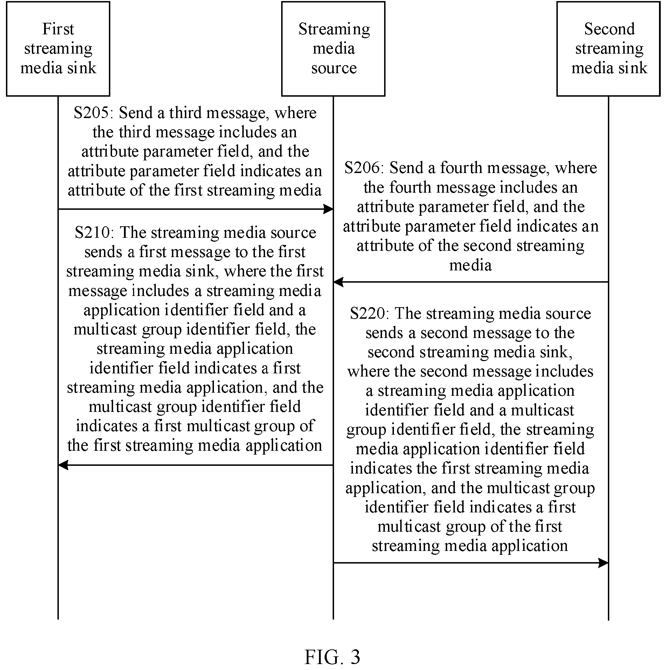

FIG. 3 is a schematic flowchart of a communication method according to another embodiment of this application. As shown in FIG. 3, the communication method may further include S205, and/or may further include S206.

It may be understood that, in FIG. 3, that S205 is performed before S210 is merely an example. Alternatively, S205 may be performed after S210.

It may be understood that, in FIG. 3, that S206 is performed before S210 is merely an example. Alternatively, S206 may be performed before S205, may be performed between S210 and S220, or may be performed after S220.

S205: The first streaming media sink sends a third message to the streaming media source, where the third message includes an attribute parameter field. Correspondingly, the streaming media source receives the third message from the first streaming media sink.

Optionally, the first streaming media sink may send the third message to the streaming media source in a point-to-point transmission mode (unicast mode).

In the third message, the attribute parameter field indicates at least one of the following attributes of the first streaming media sink: a codec quantity, an encoder identifier, a resolution, a frame rate, a codec profile, a codec level, a codec tier, a media data encapsulation format, a media data transmission protocol, a protocol stack type, a communication mode, or a spatial location, where the communication mode is multicast or unicast.

Optionally, the third message may further include an attribute field. The attribute field indicates that the third message includes the at least one of the following attributes of the first streaming media sink: the codec quantity, the encoder identifier, the resolution, the frame rate, the codec profile, the codec level, the codec tier, the media data encapsulation format, the media data transmission protocol, the protocol stack type, the communication mode, or the spatial location, where the communication mode is the multicast or the unicast.

The codec profile specifies coding tools and algorithms used when the first streaming media sink obtains a bitstream by using a codec.

The codec level specifies processing load and storage capacity parameters of the codec indicated by the codec profile. These parameters may include a sampling rate, a resolution, a maximum value of a bit rate, a minimum value of a compression rate, a capacity of a decoded picture buffer (decoded picture buffer, DPB), and a capacity of a coded picture buffer (coded picture buffer, CPB).

The codec tier specifies a bit rate indicated by each codec level.

For the streaming media source and the streaming media sink, usually, to support a high profile, level, and tier, a low profile, level, and tier need to be supported first. This indicates compatibility.

Optionally, the third message may include a member identity field, and the member identity field indicates the first streaming media sink.

Optionally, the third message may include a message type field, and the message type field indicates that a message type of the third message is a group member join request message or a group member query acknowledgment message.

Optionally, the third message may include a streaming media application identifier field, and the streaming media application identifier field indicates the first streaming media application. Based on the streaming media application identifier field, the streaming media source may learn that the first streaming media sink requests to join a multicast group of the first streaming media application.

Optionally, the third message may include a multicast group identifier field, and the multicast group identifier field indicates the first multicast group of the first streaming media application. Based on the multicast group identifier field, the streaming media source member may learn that the first streaming media sink requests to join the first multicast group.

For example, before sending the third message, the first streaming media sink learns that a multicast group corresponding to the first streaming media application includes the first multicast group. In this case, if the first streaming media sink expects to join the first multicast group, the first streaming media sink may include the multicast group identifier field in the first group member join request message, and indicate an identifier of the first multicast group based on the multicast group identifier field.

In some examples, before the first streaming media sink sends the third message, even if the first streaming media sink learns that the multicast group corresponding to the first streaming media application includes the first multicast group, but does not expect to join the first multicast group, or does not learn of multicast groups corresponding to the first streaming media, the third message may not include the multicast group identifier field, or the multicast group identifier field may not indicate the first multicast group.

In an example, the third message is the group member join request message or the group member query acknowledgment message, and the first message is the group member join response message.

In still another example, the first message is the group member query indication message, and the third message is the group member join request message or a group member pass message.

In this embodiment, in a scenario in which the third message is the group member join request message or the group member query acknowledgment message, and the first message is the group member join response message, the streaming media source may determine, based on the attribute field and the attribute parameter field in the third message, that the first streaming media sink is the member in the first multicast group of the first streaming media application.

In an example, the streaming media source may calculate, based on the resolution and the frame rate of the first streaming media sink, an amount of data per second (in a unit of byte/second) before compression, and the resolution and the frame rate may be a requirement of the first streaming media sink on image quality (for example, definition and smoothness) of the first streaming media application. Then, based on a wireless communication receiving rate (namely, a communication capability, in a unit of bps) of the first streaming media sink, with reference to the calculated amount of data per second before compression, and through comprehensive consideration of the codec parameters reported by the first streaming media sink, the streaming media source may determine a codec type and codec parameters corresponding to the codec type, determine an amount of data that can be transmitted after compression (namely, a bit rate, in a unit of bps), and determine a multicast group based on the codec type, the codec parameters, and the data stream that can be transmitted.

For example, streaming media sinks having a same codec type and same codec parameters corresponding to the codec type may be grouped into a same multicast group.

In some implementations, a streaming media sink may have high requirements on both the resolution and the frame rate, but a communication capability (or communication bandwidth capability) of the streaming media sink is not supported. In this case, the requirement of the streaming media sink on the resolution or the frame rate may be reduced to adapt to the current communication capability. In this way, the streaming media sink may be added or updated to a multicast group having a same codec type and a same corresponding codec parameter obtained after the requirement of the streaming media sink is reduced.

S206: The second streaming media sink sends a fourth message to the streaming media source, where the fourth message includes an attribute parameter field. Correspondingly, the streaming media source receives the fourth message from the second streaming media sink.

Optionally, the second streaming media sink may send the fourth message to the streaming media source in a point-to-point transmission mode (unicast mode).

In the fourth message, the attribute parameter field indicates at least one of the following attributes of the second streaming media sink: a codec quantity, an encoder identifier, a resolution, a frame rate, a codec profile, a codec level, a codec tier, a media data encapsulation format, a media data transmission protocol, a protocol stack type, a communication mode, or a spatial location, where the communication mode is multicast or unicast. The attribute parameter field indicates a value of each attribute indicated by an attribute field in the fourth message.

Optionally, the fourth message may further include an attribute field. The attribute field indicates that the fourth message includes the at least one of the following attributes of the second streaming media sink: the codec quantity, the encoder identifier, the resolution, the frame rate, the codec profile, the codec level, the codec tier, the media data encapsulation format, the media data transmission protocol, the protocol stack type, the communication mode, or the spatial location, where the communication mode is the multicast or the unicast. The attribute parameter field indicates a value of each attribute indicated by the attribute field in the fourth message.

Optionally, the fourth message may include a member identity field, and the member identity field indicates the second streaming media sink.

Optionally, the fourth message may include a message type field, and the message type field indicates that a message type of the fourth message is a group member join request message or a group member query acknowledgment message.

Optionally, the fourth message may include a streaming media application identifier field, and the streaming media application identifier field indicates the first streaming media application. Based on the streaming media application identifier field, the streaming media source may learn that the second streaming media sink requests to join the multicast group of the first streaming media application.

Optionally, the fourth message may include a multicast group identifier field, and the multicast group identifier field indicates the second multicast group of the first streaming media application. Based on the multicast group identifier field, the streaming media source member may learn that the second streaming media sink requests to join the second multicast group.

For example, before sending the fourth message, the second streaming media sink learns that the multicast group corresponding to the first streaming media application includes the second multicast group. In this case, if the second streaming media sink expects to join the second multicast group, the second streaming media sink may include the multicast group identifier field in the fourth message, and indicate the second multicast group based on the multicast group identifier field.

In some examples, before the second streaming media sink sends the fourth message, even if the second streaming media sink learns that the multicast group corresponding to the first streaming media application includes the second multicast group, but does not expect to join the second multicast group, or does not learn of the multicast groups corresponding to the first streaming media, the fourth message may not include the multicast group identifier field, or the multicast group identifier field may not indicate the second multicast group.

In an example, the fourth message is the group member join request message or the group member query acknowledgment message, and the second message is the group member join response message.

In still another example, the second message is the group member query indication message, and the fourth message is the group member join request message or a group member pass message.

In this embodiment, in a scenario in which the fourth message is the group member join request message or the group member query acknowledgment message, and the second message is the group member join response message, the streaming media source may determine, based on the attribute field and the attribute parameter field in the fourth message, that the second streaming media sink is the member in the second multicast group of the first streaming media application.

For an implementation in which the streaming media source may determine, based on the attribute field and the attribute parameter field in the fourth message, that the second streaming media sink is the member in the second multicast group of the first streaming media application, refer to the related content in S205. Details are not described herein again.

In this embodiment, the streaming media source performs multicast group grouping based on heterogeneous attribute parameters reported by the streaming media sink in addition to doing this according to a coarse-grained multicast member grouping rule of a multicast service, so that fine-grained grouping management can be performed on the streaming media sink by comprehensively considering the heterogeneous attribute parameters in a finer-grained manner, and different requirements of different streaming media sinks on a streaming media application can be met.

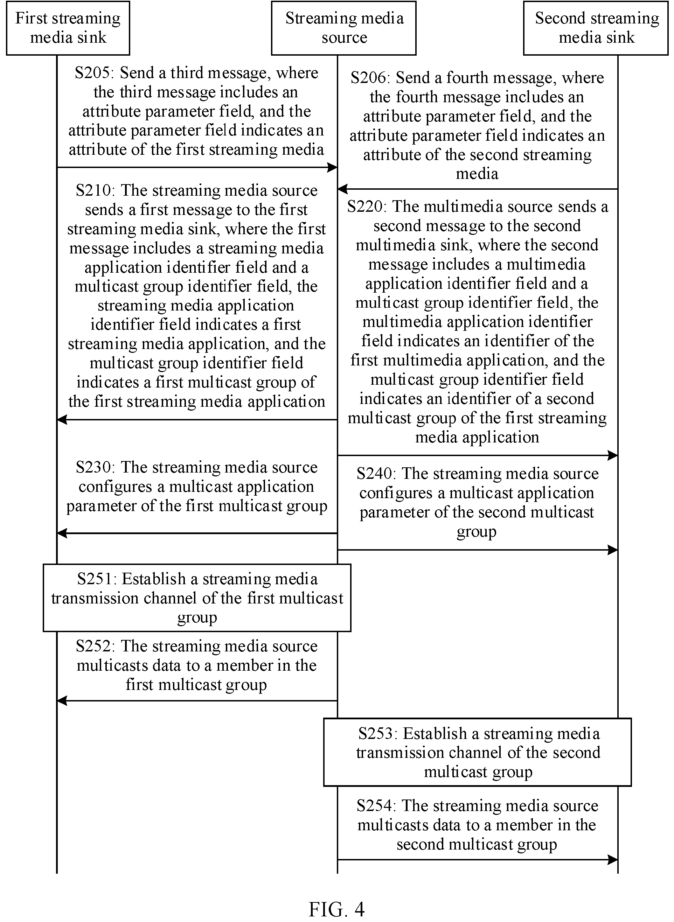

In some implementations of this embodiment, optionally, as shown in FIG. 4, in S230, the streaming media source may configure a multicast application parameter of the first multicast group for members in the first multicast group based on streaming media application parameter configuration information; and/or in S240, the streaming media source may configure a multicast application parameter of the second multicast group for members in the second multicast group based on the streaming media application parameter configuration information.

For example, the streaming media application is a video application. The multicast application parameter may be referred to as a multicast video application parameter, and may include a resolution, a codec type, a frame rate, a bit rate, and the like. The streaming media application configuration parameter is video application parameter configuration signaling.

Optionally, as shown in FIG. 4, in S251, an inter-group streaming media transmission channel is established between the streaming media source and the member (including the first streaming media sink) in the first multicast group, and in S252, the streaming media source sends streaming media data to the member (including the first streaming media sink) in the first multicast group over the channel.

For example, the first streaming media application is a video application. An inter-group video transmission channel is established between the streaming media source and the member (including the first streaming media sink) in the first multicast group, and the streaming media source sends video data to the member (including the first streaming media sink) in the first multicast group over the channel.

Optionally, as shown in FIG. 4, in S253, an inter-group streaming media transmission channel is established between the streaming media source and the member (including the second streaming media sink) in the second multicast group, and in S254, the streaming media source sends streaming media data to the member (including the second streaming media sink) in the second multicast group over the channel.

For example, the first streaming media application is a video application. An inter-group video transmission channel is established between the streaming media source and the member (including the second streaming media sink) in the second multicast group, and the streaming media source sends video data to the member (including the second streaming media sink) in the second multicast group over the channel.

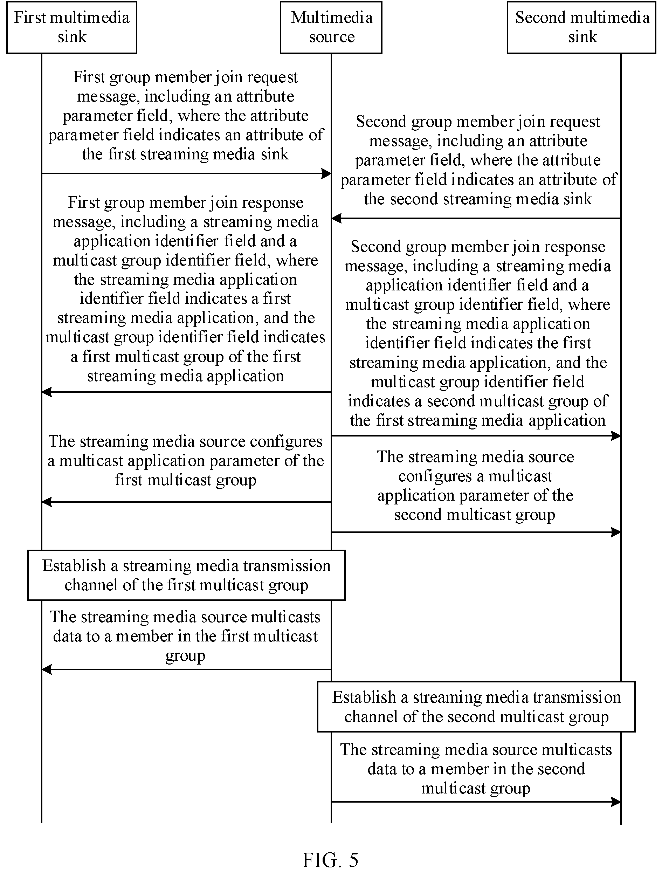

In some embodiments of this application, when the third message and the fourth message are the group member join request messages, and the first message and the second message are the group member join response messages, a schematic flowchart of interaction among the streaming media source, the first streaming media sink, and the second streaming media sink is shown in FIG. 5.

In FIG. 5, for a first group member join request message, refer to the third message in the foregoing embodiment; for a second group member join request message, refer to the fourth message in the foregoing embodiment; for a first group member join response message, refer to the first message in the foregoing embodiment; and for a second group member join response message, refer to the second message in the foregoing embodiment.

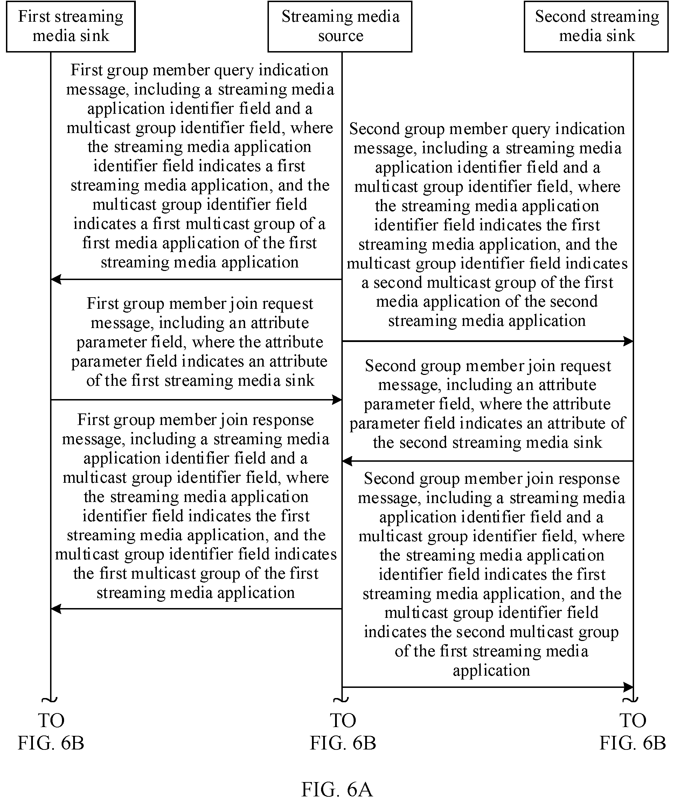

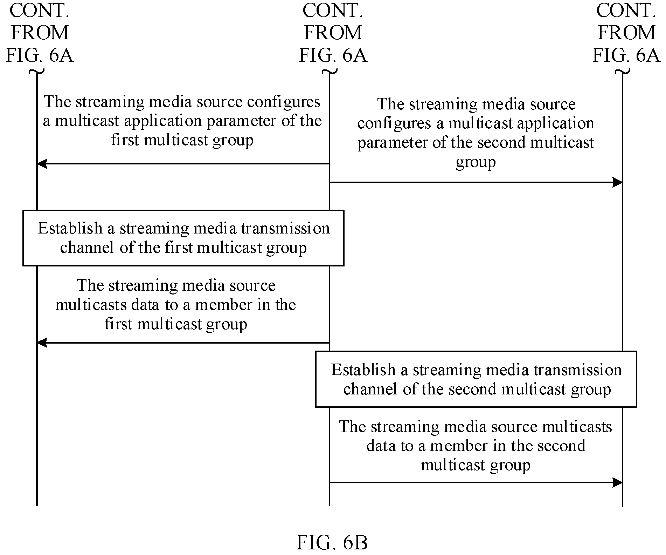

Optionally, as shown in FIG. 6A and FIG. 6B, before the first group member join request message, the streaming media source may send a first group member query indication message to the first streaming media sink. For related content of the first group member query indication message, refer to the related content when the first message is the group member query indication message in the foregoing embodiment.

In this embodiment, the streaming media source sends the group member query indication message to query for a member in a multicast group of a streaming media application indicated in the group member query indication message. If a streaming media sink expects to be a member in a multicast group, the streaming media sink may send a group member join request message to the streaming media source, and the group member join request message may carry an identifier of the multicast group that the streaming media sink expects to join.

Optionally, the first group member join request message in FIG. 6A may also be replaced with a first group member query acknowledgment message. For example, before the first streaming media sink receives the first group member query indication message that can query for the member in the first multicast group, the first streaming media sink is already the member in the first multicast group. In this case, after receiving the first group member query indication message, the first streaming media sink may send the first group member query acknowledgment message to the streaming media source, to notify the streaming media source that "the first streaming media sink is the member in the first multicast group". Optionally, the first group member query acknowledgment message may further include the attribute of the first streaming media sink, so that the streaming media source re-groups the multicast group based on the attribute, to ensure that the multicast group is grouped more properly.

Optionally, if the streaming media source re-groups the multicast group based on the attribute, of the first streaming media sink, reported in the first group member query acknowledgment message, the streaming media source may further indicate, to the first streaming media sink by using a group member join response message or another message, a latest multicast group to which the first streaming media sink belongs.

After re-grouping the first streaming media sink, the streaming media source may update and maintain an entry in a multicast member management table. For example, a new entry is added, an original entry is deleted, or information in an original entry is updated to latest information.

Optionally, the second group member join request message in FIG. 6A may also be replaced with a second group member query acknowledgment message. For example, before the second streaming media sink receives the second group member query indication message that can query for the member in the second multicast group, the second streaming media sink is already the member in the second multicast group. In this case, after receiving the second group member query indication message, the second streaming media sink may send the second group member query acknowledgment message to the streaming media source, to notify the streaming media source that "the second streaming media sink is the member in the second multicast group". Optionally, the second group member query acknowledgment message may further include the attribute of the second streaming media sink, so that the streaming media source re-groups the multicast group based on the attribute, to ensure that the multicast group is grouped more properly.

Optionally, if the streaming media source re-groups the multicast group based on the attribute, of the second streaming media sink, reported in the second group member query acknowledgment message, the streaming media source may further indicate, to the second streaming media sink by using a group member join response message or another message, a latest multicast group to which the second streaming media sink belongs.

After re-grouping the second streaming media sink, the streaming media source may update and maintain the entry in the multicast member management table. For example, a new entry is added, an original entry is deleted, or information in an original entry is updated to latest information.

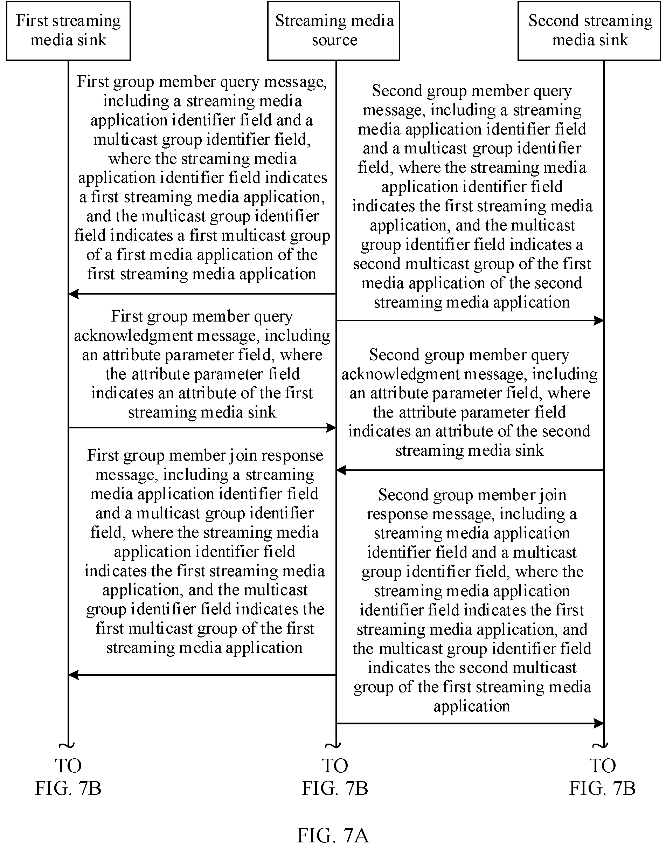

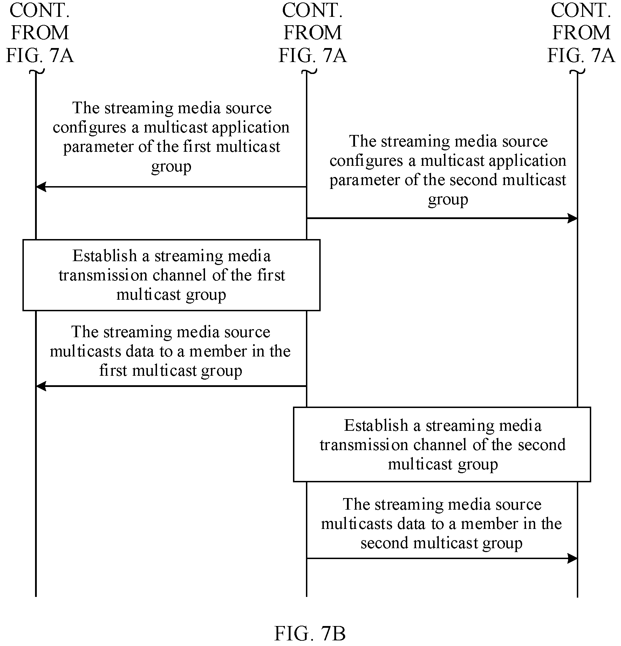

In FIG. 6A and FIG. 6B, when the first group member join request message is replaced with the first group member query acknowledgment message, and the second group member join request message is replaced with the second group member query acknowledgment message, a schematic flowchart of interaction between the streaming media source and the streaming media sink is shown in FIG. 7A and FIG. 7B.

In this embodiment of this application, each time after the streaming media source re-groups a multicast group, the streaming media source may re-transmit an attribute parameter of the multicast group to a member in the multicast group by using streaming media application configuration parameter signaling, re-establish a transmission channel, and multicast a data stream over an updated transmission channel.

In this embodiment of this application, the streaming media sink may leave the multicast group to which the streaming media sink belongs. When the streaming media sink leaves the multicast group, the streaming media sink sends a group member leave notification message to the streaming media source, to notify the multicast group that the streaming media sink is to leave. After receiving the group member leave notification message, the streaming media source may perform at least one of the following operations: feeding back a group member leave response message to the streaming media sink; updating and maintaining the multicast group member management table, for example, deleting a corresponding entry; or cooperating with the streaming media sink to release multicast group transmission channel resources.

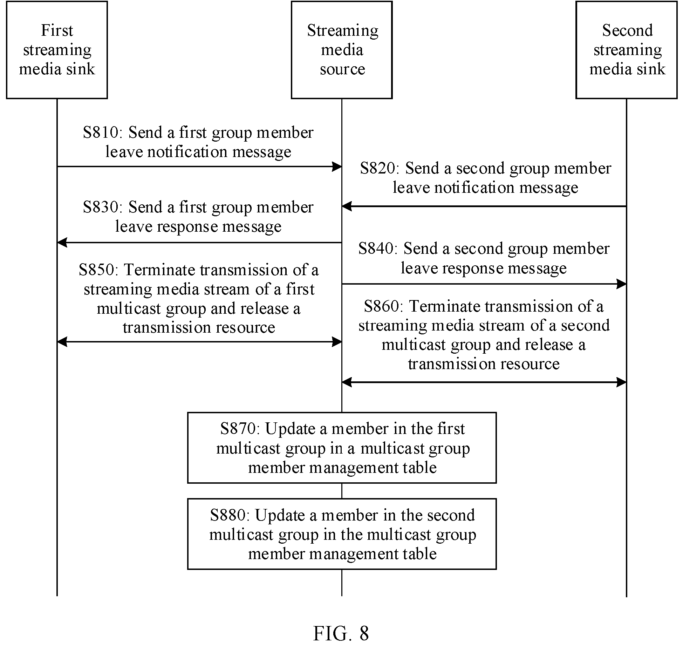

FIG. 8 is a schematic flowchart of a communication method in which a member leaves a multicast group according to an embodiment of this application. S810: The first streaming media sink sends a first group member leave notification message to the streaming media source, as shown in FIG. 8.

A first group member leave request message may include a streaming media application identifier field and a multicast group identifier field, where the streaming media application identifier field indicates the first streaming media application, and the multicast group identifier field indicates the first multicast group.

The first group member leave request message may further include at least one of the following fields: a message type field or a member identity field. In the first group member leave request message, the message type field indicates that a message type is a group member leave request message, and the member field indicates the first streaming media sink.

S820: The second streaming media sink sends a second group member leave notification message to the streaming media source.

A second group member leave request message may include a streaming media application identifier field and a multicast group identifier field, where the streaming media application identifier field indicates the first streaming media application, and the multicast group identifier field indicates the second multicast group.

The second group member leave request message may further include at least one of the following fields: a message type field or a member identity field. In the second group member leave request message, the message type field indicates that a message type is a group member leave request message, and the member field indicates the second streaming media sink.

S830: The streaming media source sends a first response message to the first streaming media sink, where the first response message includes a response result field, and the response result field indicates that a request is accepted, signaling is not identified, a signaling format is incorrect, a signaling format is invalid, a multicast streaming media application identifier is incorrect, a multicast streaming media application identifier is invalid, or there is another error.

The first response message may further include at least one of the following fields: a message type field, a multicast group quantity field, a streaming media application identifier field, a multicast group identifier field, or a member identity field.

In the first response message, the message type field indicates that the first response message is a group member leave response message, the streaming media application identifier field indicates the first streaming media application, the multicast group quantity field indicates the quantity of multicast groups of the first streaming media application, the multicast group identifier field indicates the first multicast group, and the member identity field indicates the first streaming media sink.

S840: The streaming media source sends a second response message to the second streaming media sink, where the second response message includes a response result field, and the response result field indicates that a request is accepted, signaling is not identified, a signaling format is incorrect, a signaling format is invalid, a multicast streaming media application identifier is incorrect, a multicast streaming media application identifier is invalid, or there is another error.

The second response message may further include at least one of the following fields: a message type field, a multicast group quantity field, a streaming media application identifier field, a multicast group identifier field, or a member identity field.

In the second response message, the message type field indicates that the second response message is a group member leave response message, the streaming media application identifier field indicates the first streaming media application, the multicast group quantity field indicates the quantity of multicast groups of the first streaming media application, the multicast group identifier field indicates the second multicast group, and the member identity field indicates the second streaming media sink.

S850: The streaming media source locally deletes, based on information carried in the first group member leave notification message, group member transmission channel information associated with the first multicast group, and/or sends signaling of "releasing a multicast transmission channel resource and deleting a multicast streaming media application configuration parameter" to the group member (including the first streaming media source) in the first multicast group.

S860: The streaming media source locally deletes, based on information carried in the second group member leave notification message, group member transmission channel information associated with the second multicast group, and/or sends signaling of "releasing a multicast transmission channel resource and deleting a multicast streaming media application configuration parameter" to the group member (including the second streaming media source) in the second multicast group.

In this embodiment, S850 and S860 may be referred to as termination of multicast streaming media stream transmission and release of transmission resources.

S870: The streaming media source updates the member in the first multicast group in the multicast group member management table. For example, the streaming media source manages the first entry in the multicast group member management table, where the first entry includes the identifier of the first streaming media application, the identifier of the first multicast group, and the identifier of the first streaming media sink.

S880: The streaming media source updates the member in the second multicast group in the multicast group member management table. For example, the streaming media source manages the second entry in the multicast group member management table, where the second entry includes the identifier of the first streaming media application, the identifier of the second multicast group, and the identifier of the second streaming media sink.

Optionally, the fields included in the messages mentioned in this application may be fields included at an application layer, or may be fields included at another layer, for example, a physical layer or a streaming media access layer.

It may be understood that the message mentioned in the content of this application may be referred to as a group member management message.

This application further provides a message format, and the message format may also be referred to as a signaling format. The message format is used for message or signaling transmission between the streaming media source and the streaming media sink. For example, the group member management message may be in this message format. An example of a message format provided in this application is shown in Table 1.

**Table 1 Message format**

| M.Type (8 bits) | Max Rsp Time | Reserved |
|---|---|---|
| App.ID/UUID (32 bits) | | |
| Heterogeneous attributes bitmap (16 bits) | Attributes Length | |

| Attributes Data (Variable-length field) | | |
|---|---|---|
| Reserved | Num.of Group/Source (N) | |
| Group/Source ID List [1] | | |
| ... | | |
| Group/Source ID List [N] | | |

The following describes an example definition of each field in the message format in Table 1.

The Msg. Type field may occupy 8 bits (bits), and example values of the 8 bits and meanings indicated by the values are as follows: 0x00 indicates reservation, 0x01 indicates a group member join request message, 0x02 indicates a group member join response message, 0x03 indicates a multicast group query indication message, 0x04 indicates a group member query acknowledgment message, and 0x05 indicates a group member leave message.

The Max Rsp Time field may occupy 8 bits. Usually, when a value of the Msg.Type field is 0x03, a message carries the Max Rsp Time field, and the field indicates maximum response time of a group query indication message.

The Heterogeneous attributes (heterogeneous attributes) bitmap field may occupy 16 bits. Usually, when the value of the Msg.Type field in a message is 0x01, the Heterogeneous attributes bitmap field is carried. The field identifies heterogeneous attributes of a group member. One bit identifies one attribute, and a subsequent attributes list field carries parameter values of corresponding attributes in a bitmap (bitmap) sequence.

Example attributes of bit identifiers in the Heterogeneous attributes bitmap field are as follows: Bit 0 identifies a screen size, bit 1 identifies a resolution, bit 2 identifies a codec type, bit 3 identifies a frame rate, bit 4 identifies a bit rate, bit 5 identifies a delay, bit 6 identifies a receiving rate, and other bits are reserved bits.

The Attributes Data (Variable-length field) field indicates a parameter value list of the heterogeneous attributes of the group member, and a carried parameter type is determined based on a value of the Heterogeneous attributes bitmap field.

For example, if values of a 1^{st} bit and a 2^{nd} bit of the Heterogeneous attributes bitmap field are 1, and values of other bits are 0, the Attributes Data field may include the resolution and the codec type of the group member.

The App.ID field occupies 32 bits. When the value of Msg.Type is 0x01, 0x02, 0x03, 0x04, or 0x05, a message carries a unique identifier of a streaming media application. The identifier may be a service identifier (UUID) defined by a SparkLink standard, and may be uniquely allocated by the SparkLink standard to the streaming media application. The field may be used to identify query, member joining, or member leaving of the streaming media application.

The Num.of Group (N) field may occupy 16 bits. When the value of the Msg. Type field is 0x02, 0x03, 0x04, or 0x05, a message carries the Num.of Group (N) field. The Num.of Group (N) field indicates a quantity of multicast groups (or multicast sources) included in the message, and may be used to query for a multicast source or a multicast source in a streaming media application.

The Group ID List field may occupy 32 bits. When the value of the Msg.Type field is 0x02, 0x03, 0x04, or 0x05, a message carries the Group ID List field. The Group ID List field indicates an identifier of a multicast group, and is used to identify the multicast group. Usually, one multicast group uniquely corresponds to one multicast source.

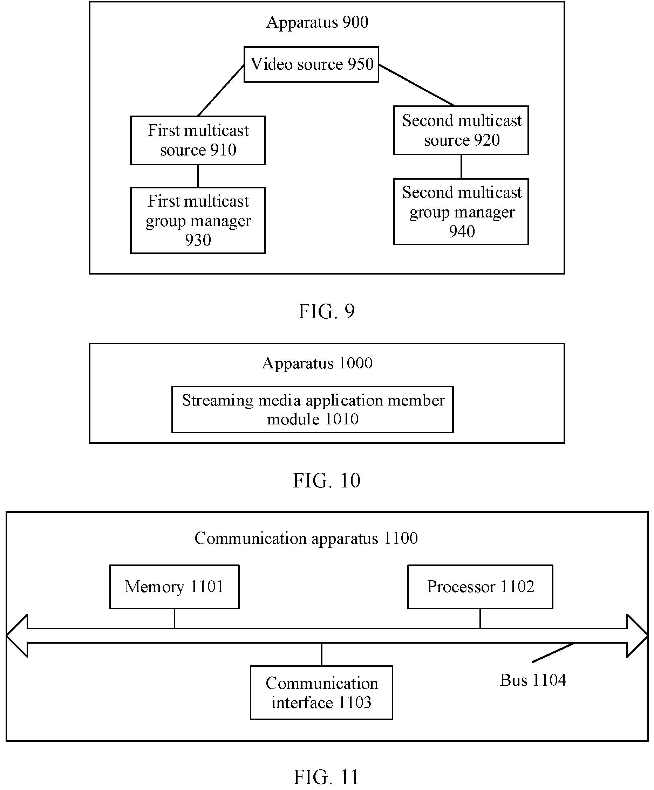

FIG. 9 is a diagram of an example structure of a communication apparatus according to an embodiment of this application. As shown in FIG. 9, the communication apparatus 900 may be a streaming media source or a chip used in a streaming media source.

The streaming media source 900 may include a video source (video source) 950, a first multicast source (multicast source) 910, a second multicast source 920, a first multicast group manager (multicast group manager) 930, and a second multicast group manager 940.

The video source may generate data of a streaming media application.

The first multicast source 910 is associated with the first multicast group manager 930, and the second multicast source 920 is associated with the second multicast group manager 940.

Optionally, the multicast group manager and/or the multicast source in this application may be a logical function concept.

That the streaming media source 900 includes two multicast sources is merely an example. Optionally, the streaming media source 900 in this application may further include more multicast sources.

That the streaming media source 900 includes two multicast group managers is merely an example. Optionally, the streaming media source 900 in this application may further include more multicast group managers.

A multicast source may process, based on an attribute parameter of an associated multicast group, the data generated by the video source, to obtain data suitable for a member in the multicast group. For example, the first multicast source may generate first multicast group data of a first streaming media application based on an attribute parameter of a first multicast group, and the second multicast source may generate second multicast group data of the first streaming media application based on an attribute parameter of a second multicast group.

A multicast group manager usually has functions of generating and maintaining a "multicast group member management entry". Optionally, the multicast group manager may further have a function of grouping a multicast group for a streaming media sink.

For example, the first multicast group manager may maintain a member management table of the first multicast group, and the second multicast group manager may maintain a member management table of the second multicast group.

In this embodiment, a multicast source sends a same streaming media data stream to a plurality of streaming media sinks in a multicast group maintained by a multicast group manager associated with the multicast source. Each multicast source generates and sends, via a codec, adapted data generated by the video source.

In other words, a codec in the streaming media source may be configured with a plurality of coding parameters, to output streaming media streams obtained through different compression and coding, and the codec corresponding to different coding parameters may form different multicast sources. A coding example of a codec is scalable video coding (scalable video coding, SVC).

In this application, a multicast group (multicast group) includes a group of devices, and a same unique group identifier (group ID) is allocated to the devices in the group. Usually, one multicast group may correspond to one multicast group manager, one multicast source, and at least one multicast group member.

The communication apparatus 900 in FIG. 9 may be configured to implement the method in any one of the foregoing method embodiments.

In an example, the first multicast group manager 930 may be configured to implement an operation that is related to the first multicast group or the first streaming media sink and that is implemented by the streaming media source in any embodiment in FIG. 2 to FIG. 8.

For example, the first multicast group manager 930 may be configured to implement operations implemented by the streaming media source in S205, S210, S230, S251, S810, S830, S850, and S870.

For another example, the first multicast source 910 may be configured to implement an operation implemented by the streaming media source in S252.

In an example, the second multicast group manager 940 may be configured to implement an operation that is related to the second multicast group or the second streaming media sink and that is implemented by the streaming media source in any embodiment in FIG. 2 to FIG. 8.

For example, the second multicast group manager 940 may be configured to implement operations implemented by the streaming media source in S206, S220, S240, S252, S820, S840, S860, and S880.

For another example, the second multicast source 920 may be configured to implement an operation implemented by the streaming media source in S254.

FIG. 10 is a diagram of a structure of a communication apparatus according to an embodiment of this application. The communication apparatus 1000 may be a streaming media sink, or may be a chip used in a streaming media sink. As shown in FIG. 10, the communication apparatus 1000 includes a streaming media application member module 1010.

The communication apparatus 1000 may be configured to implement an operation implemented by the first streaming media sink or the second streaming media sink in the method shown in any one of FIG. 2 to FIG. 8.

For example, the streaming media application member module 1010 may be configured to implement operations implemented by the first streaming media sink in S205, S210, S230, S251, S810, S830, S850, and S252.

For example, the streaming media application member module 1010 may be configured to implement operations implemented by the second streaming media sink in S206, S220, S240, S252, S820, S840, S860, and S254.

FIG. 11 is a diagram of a structure of a communication apparatus according to another embodiment of this application. The apparatus 1100 shown in FIG. 11 may be configured to perform an operation performed by the streaming media source in the embodiment shown in any one of FIG. 2 to FIG. 8, or configured to perform an operation performed by the first streaming media sink or the second streaming media sink in the embodiment shown in any one of FIG. 2 to FIG. 8.

As shown in FIG. 11, the apparatus 1100 in this embodiment includes a memory 1101, a processor 1102, a communication interface 1103, and a bus 1104. The memory 1101, the processor 1102, and the communication interface 1103 are communicatively connected to one another through the bus 1104.

The memory 1101 may be a read-only memory (read-only memory, ROM), a static storage device, a dynamic storage device, or a random access memory (random access memory, RAM). The memory 1101 may store a program. When the program stored in the memory 1101 is executed by the processor 1102, the processor 1102 is configured to perform steps performed by the streaming media source in the method shown in FIG. 2 to FIG. 8, or the processor 1102 is configured to perform steps performed by the first streaming media sink or the second streaming media sink in the method shown in FIG. 2 to FIG. 8.

The processor 1102 may be a general-purpose central processing unit (central processing unit, CPU), a microprocessor, an application-specific integrated circuit (application-specific integrated circuit, ASIC), or one or more integrated circuits configured to execute a related program.

The processor 1102 may alternatively be an integrated circuit chip and has a signal processing capability. In an implementation process, the related steps in embodiments of this application may be completed by using a hardware integrated logic circuit in the processor 1102 or instructions in a form of software.

The processor 1202 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps of the methods disclosed with reference to embodiments of this application may be directly performed and completed by a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1101. The processor 1102 reads information in the memory 1101, and completes, in combination with the hardware of the processor 1102, functions that need to be performed by units included in the apparatus in this application.

The communication interface 1103 may use, but is not limited to, a transceiver apparatus like a transceiver, to implement communication between the apparatus 1100 and another device or a communication network.

The bus 1104 may include a path for transferring information between components (for example, the memory 1101, the processor 1102, and the communication interface 1103) in the apparatus 1100.

It should be understood that, the apparatus 1100 shown in this embodiment of this application may be a terminal device, or may be a chip configured in a terminal device.

Alternatively, the apparatus 1100 shown in this embodiment of this application may be a management device, or may be a chip configured in a management device.

Some embodiments of this application further provide a computer program product, for example, a video playing application. When the computer program product runs on a processor, the method implemented by the electronic device in any one of the foregoing embodiments may be implemented. Some embodiments of this application further provide a computer-readable storage medium. The computer-readable storage medium includes computer instructions. When the computer instructions are run on a processor, the method implemented by the electronic device in any one of the foregoing embodiments may be implemented. Some embodiments of this application further provide a streaming media system. The streaming media system includes the streaming media source in the embodiment shown in any one of FIG. 2 to FIG. 8, and the first streaming media sink and the second streaming media sink in the embodiment shown in any one of FIG. 2 to FIG. 8.

It should be noted that the modules or components in the foregoing embodiments may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form of a processing element scheduling program code, the processing element may be a general-purpose processor, for example, a central processing unit (central processing unit, CPU) or another processor, for example, a controller, that may invoke the program code. For another example, these modules may be integrated together and implemented in a form of a system-on-a-chip (system-on-a-chip, SOC).

All or some of the foregoing embodiments may be implemented by software, hardware, firmware, software modules, or any combination thereof. When software is used to implement embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive Solid-State Drive (SSD)), or the like.

A term "a plurality of" in this specification means two or more. A term "and/or" in this specification describes merely an association relationship between associated objects and indicates that three relationships may exist. For example, A and/or B may indicate the following three cases: Only A exists, both A and B exist, and only B exists. In addition, a character "/" in this specification usually indicates an "or" relationship between the associated objects. In a formula, the character "/" indicates a "division" relationship between the associated objects. In addition, it should be understood that in the description of this application, terms such as "first" and "second" are merely used for distinguishing and description, but should not be understood as indicating or implying relative importance, or should not be understood as indicating or implying a sequence.

It may be understood that various numbers in embodiments of this application are merely used for distinguishing for ease of description and are not used to limit the scope of embodiments of this application.

It may be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

## Claims

1. A communication method, wherein the method comprises:
sending, by a streaming media source, a first message to a first streaming media sink, wherein the first message comprises a first streaming media application identifier field and a first multicast group identifier field, the first streaming media application identifier field indicates a first streaming media application, the first multicast group identifier field indicates a first multicast group of the first streaming media application, and the first streaming media sink belongs to the first multicast group; and
sending, by the streaming media source, a second message to a second streaming media sink, wherein the second message comprises a second streaming media application identifier field and a second multicast group identifier field, the second streaming media application identifier field indicates the first streaming media application, the second multicast group identifier field indicates a second multicast group of the first streaming media application, and the second streaming media sink belongs to the second multicast group.

2. The method according to claim 1, wherein the method further comprises:
receiving, by the streaming media source, a third message from the first streaming media sink, wherein the third message comprises a first attribute parameter field, and the first attribute parameter field indicates at least one of the following attributes of the first streaming media sink: a codec quantity, an encoder identifier, a resolution, a frame rate, a codec profile, a codec level, a codec tier, a media data encapsulation format, a media data transmission protocol, a protocol stack type, a communication mode, or a spatial location, wherein the communication mode is multicast or unicast.

3. The method according to claim 2, wherein the method further comprises:
grouping, by the streaming media source, the first streaming media sink into the first multicast group based on the first attribute parameter field.

4. The method according to claim 2 or 3, wherein the third message further comprises at least one of the following fields: a first attribute field, a first message type field, or a first member identity field; and
the first attribute field indicates content indicated by the first attribute parameter field, the first message type field indicates that the third message is a group member join request message or a group member query acknowledgment message, and the first member identity field indicates the first streaming media sink.

5. The method according to any one of claims 2 to 4, wherein before the receiving, by the streaming media source, a third message from the first streaming media sink, the method further comprises:
sending, by the streaming media source, a fourth message to the first streaming media sink, wherein the fourth message is used to query for a member in at least one multicast group of at least one streaming media application, the at least one streaming media application comprises the first streaming media application, and the at least one multicast group comprises the first multicast group.

6. The method according to claim 5, wherein the fourth message comprises at least one of the following fields: a second message type field, a third streaming media application identifier field, or a multicast group field, the second message type field indicates that the fourth message is a group member query indication message, the third streaming media application identifier field indicates the at least one streaming media application, and the multicast group field indicates the at least one multicast group.

7. The method according to any one of claims 1 to 6, wherein the first message comprises at least one of the following fields: a first response result field, a third message type field, a first multicast group quantity field, or a second member identity field; and
the first response result field indicates that the streaming media source accepts a request, the third message type field indicates that the first message is a group member join response message, the first multicast group quantity field indicates a quantity of multicast groups of the first streaming media application, and the second member identity field indicates the first streaming media sink.

8. The method according to any one of claims 1 to 7, wherein the method further comprises:
sending, by the streaming media source, a first media stream to a member in the first multicast group; and
sending, by the streaming media source, a second media stream to a member in the second multicast group, wherein
the first media stream is different from the second media stream in at least one of the following attributes: a codec type, a resolution, a frame rate, a codec profile, a codec level, a codec tier, a media data encapsulation format, a media data transmission protocol, a protocol stack type, or a communication mode, wherein the communication mode is multicast or unicast.

9. The method according to any one of claims 1 to 8, wherein the method further comprises:
maintaining, by the streaming media source, a multicast group member management table, wherein the multicast group member management table comprises a first entry and a second entry, the first entry comprises an identifier of the first streaming media application, an identifier of the first multicast group, and an identifier of the first streaming media sink, and the second entry comprises the identifier of the first streaming media application, an identifier of the second multicast group, and an identifier of the second streaming media sink.

10. The method according to any one of claims 1 to 9, wherein the method further comprises:
receiving, by the streaming media source, a group member leave request message from the first streaming media sink, wherein the group member leave request message comprises a fourth streaming media application identifier field and a third multicast group identifier field, the fourth streaming media application identifier field indicates the first streaming media application, and the third multicast group identifier field indicates the first multicast group.

11. The method according to claim 10, wherein the group member leave request message further comprises at least one of the following fields: a fourth message type field or a third member identity field; and
the fourth message type field indicates that a message type is the group member leave request message, and the third member field indicates the first streaming media sink.

12. The method according to claim 11, wherein the method further comprises:
sending, by the streaming media source, a response message of the group member leave request message to the first streaming media sink, wherein the response message comprises a second response result field, and the second response result field indicates that the streaming media source accepts a request, signaling is not identified, a signaling format is incorrect, a signaling format is invalid, a multicast streaming media application identifier is incorrect, a multicast streaming media application identifier is invalid, or there is another error.

13. The method according to claim 12, wherein the response message comprises at least one of the following fields: a fifth message type field, a second multicast group quantity field, a fifth streaming media application identifier field, a fourth multicast group identifier field, or a fourth member identity field; and
the fifth message type field indicates that the response message is a group member leave response message, the fifth streaming media application identifier field indicates the first streaming media application, the second multicast group quantity field indicates the quantity of multicast groups of the first streaming media application, the fourth multicast group identifier field indicates the first multicast group, and the fourth member identity field indicates the first streaming media sink.

14. The method according to any one of claims 1 to 13, wherein the method further comprises:
receiving, by the streaming media source, a fifth message from a third streaming media sink, wherein the fifth message comprises at least one of the following fields: a sixth message type field, a second attribute field, a second attribute parameter field, a sixth streaming media application identifier field, or a fifth member identity field; and
sending, by the streaming media source, a sixth message to the third streaming media sink, wherein the sixth message comprises at least one of the following fields: a seventh message type field, a third multicast group quantity field, a seventh streaming media application identifier field, a sixth member identity field, or a third response result field, wherein
the sixth message type field indicates that the fifth message is a group member join request message or a group member query acknowledgment message;
the second attribute field indicates that the fifth message comprises at least one of the following attributes of the third streaming media sink: a codec quantity, an encoder identifier, a resolution, a frame rate, a codec profile, a codec level, a codec tier, a media data encapsulation format, a media data transmission protocol, a protocol stack type, a communication mode, or a spatial location, wherein the communication mode is multicast or unicast;
the second attribute parameter field indicates the at least one of the following attributes of the third streaming media sink: the codec quantity, the encoder identifier, the resolution, the frame rate, the codec profile, the codec level, the codec tier, the media data encapsulation format, the media data transmission protocol, the protocol stack type, the communication mode, or the spatial location, wherein the communication mode is the multicast or the unicast;
the seventh message type field indicates that the sixth message is a group member join response message, and the third response result field indicates that signaling is not identified, a signaling format is incorrect, a signaling format is invalid, a multicast streaming media application identifier is incorrect, a multicast streaming media application identifier is invalid, or there is another error;
the sixth streaming media application identifier field and the seventh streaming media application identifier field indicate the first streaming media application; and
the third multicast group quantity field indicates the quantity of multicast groups of the first streaming media application, and the fifth member identity field and the sixth member identity field indicate the third streaming media sink.

15. The method according to any one of claims 1 to 14, wherein the first streaming media application identifier field further indicates a second streaming media application, the first multicast group identifier field further indicates a third multicast group of the second streaming media application, and the first streaming media sink belongs to the third multicast group.

16. A communication method, wherein the method comprises:
receiving, by a first streaming media sink, a first message from a streaming media source, wherein the first message comprises a first streaming media application identifier field and a first multicast group identifier field, the first streaming media application identifier field indicates a first streaming media application, the first multicast group identifier field indicates a first multicast group of the first streaming media application, the first multicast group is one of a plurality of multicast groups of the first streaming media application, and the first streaming media sink belongs to the first multicast group.

17. The method according to claim 16, wherein the method further comprises:
sending, by the first streaming media sink, a second message to the streaming media source, wherein the second message comprises a first attribute parameter field, and the second attribute parameter field indicates at least one of the following attributes of the first streaming media sink: a codec quantity, an encoder identifier, a resolution, a frame rate, a codec profile, a codec level, a codec tier, a media data encapsulation format, a media data transmission protocol, a protocol stack type, a communication mode, or a spatial location, wherein the communication mode is multicast or unicast.

18. The method according to claim 17, wherein the first attribute parameter field is used to group the first streaming media sink into the first multicast group.

19. The method according to claim 17 or 18, wherein the second message further comprises at least one of the following fields: a first attribute field, a first message type field, or a first member identity field; and
the first attribute field indicates content indicated by the first attribute parameter field, the first message type field indicates that the second message is a group member join request message or a group member query acknowledgment message, and the first member identity field indicates the first streaming media sink.

20. The method according to any one of claims 17 to 19, wherein before the sending, by the first streaming media sink, a second message to the streaming media source, the method further comprises:
receiving, by the first streaming media sink, a third message from the streaming media source, wherein the third message is used to query for a member in at least one multicast group of at least one streaming media application, the at least one streaming media application comprises the first streaming media application, and the at least one multicast group comprises the first multicast group.

21. The method according to claim 20, wherein the third message comprises at least one of the following fields: a second message type field, a third streaming media application identifier field, or a multicast group field, the second message type field indicates that the third message is a group member query indication message, the third streaming media application identifier field indicates the at least one streaming media application, and the multicast group field indicates the at least one multicast group.

22. The method according to any one of claims 16 to 21, wherein the first message comprises at least one of the following fields: a first response result field, a third message type field, a first multicast group quantity field, or a second member identity field; and
the first response field indicates that the streaming media source accepts a request, the third message type field indicates that the first message is a group member join response message, the first multicast group quantity field indicates a quantity of multicast groups of the first streaming media application, and the second member identity field indicates the first streaming media sink.

23. The method according to any one of claims 16 to 22, wherein the method further comprises:
receiving, by the first streaming media sink, a first media stream from the streaming media source, wherein the first media stream is different from a second media stream sent by the streaming media source to a member in the second multicast group in at least one of the following attributes: a codec type, a resolution, a frame rate, a codec profile, a codec level, a codec tier, a media data encapsulation format, a media data transmission protocol, a protocol stack type, or a communication mode, wherein the communication mode is multicast or unicast.

24. The method according to any one of claims 16 to 23, wherein the method further comprises:
sending, by the first streaming media sink, a group member leave request message to the streaming media source, wherein the group member leave request message comprises a fourth streaming media application identifier field and a third multicast group identifier field, the fourth streaming media application identifier field indicates the first streaming media application, and the third multicast group identifier field indicates the first multicast group.

25. The method according to claim 24, wherein the group member leave request message further comprises at least one of the following fields: a fourth message type field or a third member identity field; and
the fourth message type field indicates that a message type is the group member leave request message, and the third member field indicates the first streaming media sink.

26. The method according to claim 25, wherein the method further comprises:
receiving, by the first streaming media sink, a response message of the group member leave request message from the streaming media source, wherein the response message comprises a second response result field, and the second response result field indicates that the streaming media source accepts a request, signaling is not identified, a signaling format is incorrect, a signaling format is invalid, a multicast streaming media application identifier is incorrect, a multicast streaming media application identifier is invalid, or there is another error.

27. The method according to claim 26, wherein the response message comprises at least one of the following fields: a fifth message type field, a second multicast group quantity field, a fifth streaming media application identifier field, a fourth multicast group identifier field, or a fourth member identity field; and
the fifth message type field indicates that the response message is a group member leave response message, the fifth streaming media application identifier field indicates the first streaming media application, the second multicast group quantity field indicates the quantity of multicast groups of the first streaming media application, the fourth multicast group identifier field indicates the first multicast group, and the fourth member identity field indicates the first streaming media sink.

28. The method according to any one of claims 16 to 27, wherein the method further comprises:
sending, by the first streaming media sink, a fourth message to the streaming media source, wherein the fourth message comprises at least one of the following fields: a sixth message type field, a second attribute field, a second attribute parameter field, a sixth streaming media application identifier field, or a fifth member identity field; and
receiving, by the first streaming media sink, a fifth message from the streaming media source, wherein the fifth message comprises at least one of the following fields: a seventh message type field, a third multicast group quantity field, a seventh streaming media application identifier field, a sixth member identity field, or a third response result field, wherein
the sixth message type field indicates that the fourth message is a group member join request message or a group member query acknowledgment message;
the second attribute field indicates that the fourth message comprises the at least one of the following attributes of the first streaming media sink: the codec quantity, the encoder identifier, the resolution, the frame rate, the codec profile, the codec level, the codec tier, the media data encapsulation format, the media data transmission protocol, the protocol stack type, the communication mode, or the spatial location, wherein the communication mode is the multicast or the unicast;
the second attribute parameter field indicates the at least one of the following attributes of the first streaming media sink: the codec quantity, the encoder identifier, the resolution, the frame rate, the codec profile, the codec level, the codec tier, the media data encapsulation format, the media data transmission protocol, the protocol stack type, the communication mode, or the spatial location, wherein the communication mode is the multicast or the unicast;
the seventh message type field indicates that the fifth message is a group member join response message, and the third response result field indicates that a request is accepted, signaling is not identified, a signaling format is incorrect, a signaling format is invalid, a multicast streaming media application identifier is incorrect, a multicast streaming media application identifier is invalid, or there is another error;
the sixth streaming media application identifier field and the seventh streaming media application identifier field indicate the first streaming media application; and
the third multicast group quantity field indicates the quantity of multicast groups of the first streaming media application, and the fifth member identity field and the sixth member identity field indicate the first streaming media sink.

29. The method according to any one of claims 16 to 28, wherein the first streaming media application identifier field further indicates a second streaming media application, the first multicast group identifier field further indicates a third multicast group of the second streaming media application, and the first streaming media sink belongs to the third multicast group.

30. A communication apparatus, comprising a processor and a memory, wherein
the memory stores computer instructions; and
the processor executes the computer instructions stored in the memory, so that the communication apparatus performs the method according to any one of claims 1 to 15 or the method according to any one of claims 16 to 29.

31. A computer-readable storage medium, wherein the computer-readable storage medium stores a computer program or instructions, and when the computer program or the instructions are run, the method according to any one of claims 1 to 15 or the method according to any one of claims 16 to 29 is implemented.

32. A computer program product, comprising a computer program or instructions, wherein when the computer program or the instructions are executed by a processor, the method according to any one of claims 1 to 15 or the method according to any one of claims 16 to 29 is implemented.
